# EUROPÄISCHE PATENTANMELDUNG

(11) **EP 0 894 686 A2**
(43) Veröffentlichungstag der Anmeldung: **03.02.1999**
(21) Anmeldenummer: 98113561.9
(22) Anmeldetag: 21.07.1998
(51) Int. Cl.: B60T 11/06, B60T 11/04

(54) **Bremskraftverteilergetriebe für ein muskelkraftbetätigtes Feststellbremssystem**

(30) Priorität: 02.08.1997 DE 19733552
(71) Anmelder: Daimler-Benz Aktiengesellschaft, 70567 Stuttgart (DE)
(72) Erfinder: Mosler, Christian, 70378 Stuttgart (DE); Spielmann, Werner, 71576 Burgstetten (DE); Wendt, Hartmut, 71067 Sindelfingen (DE); Emmann, Siegfried, 71384 Weinstadt (DE)

(57) **Zusammenfassung**

Die Erfindung betrifft ein Bremskraftverteilergetriebe für ein muskelkraftbetätigtes Feststellbremssystem eines Kraftfahrzeugs bei dem die Bremskraft mindestens über Seilzüge (1-4) sowohl auf ein Rad des Fahrzeuggetriebes (4) als auch auf die Räder mindestens einer angetriebenen Fahrzeugachse (2,3) übertragen wird, wobei die Radbremsen pro Fahrzeugachse über jeweils ein Ausgleichselement (51) angelenkt werden.

Mit der Erfindung wird ein Bremskraftverteilergetriebe geschaffen, das auf einer ungleich griffigen Fahrbahn eine ausreichende Feststellwirkung auch bei einem Ausfall eines Teils der Bremsanlage gewährleistet.

## Beschreibung

Die Erfindung betrifft ein Bremskraftverteilergetriebe für ein muskelkraftbetätigtes Feststellbremssystem eines Kraftfahrzeugs bei dem die Bremskraft mindestens über Seilzüge sowohl auf ein Rad des Fahrzeuggetriebes als auch auf die Räder mindestens einer angetriebenen Fahrzeugachse übertragen wird, wobei die Radbremsen pro Fahrzeugachse über jeweils ein Ausgleichselement angelenkt werden.

Ein derartiges Bremskraftverteilergetriebe in einem Kraftfahrzeug ist aus der DE-PS 355 153 bekannt. Dort wird über mindestens ein muskelkraftbetätigtes Bedienelement ein Seilrollengetriebe bewegt, um gleichzeitig die Radbremsen einer Hinterachse und eine Getriebebremse zu betätigen. Hierzu sind beide Radbremsen über einen Seilzug, der über eine vor der Hinterachse liegende erste Seilrolle umgelenkt wird, miteinander verbunden. Das Drehlager der ersten Seilrolle ist wiederum über einen weiteren Seilzug mit der Getriebebremse verbunden. Dieser Seilzug läuft über eine vor dem Getriebe liegende zweite Seilrolle, deren Drehlager an dem Bedienelement über ein Seil befestigt ist. Die erste Seilrolle dient als Ausgleichselement für die Hinterradbremsen, während die zweite Seilrolle das Ausgleichselement zwischen der Hinterradbremse und der Getriebebremse ist. Das Seilrollengetriebe verteilt die Betätigungskraft symmetrisch auf die Radbremsen und die Getriebebremse. Konstruktionsbedingt fällt bei nur einem Seil- oder Seilzugbruch die gesamte Bremsanlage aus.

Neben dieser rein mechanischen Konstruktion sind die meisten heutigen LKW mit einem zulässigen Gesamtgewicht über fünf Tonnen mit einer druckluftunterstützten Federspeicherbremse ausgestattet. Die aufwendigen Federspeicherbremsen wirken in der Regel entweder auf die Radbremsen der Hinterachse oder auf eine Getriebebremse. Beide Systeme haben nur auf einer griffigen Fahrbahn eine ausreichende Feststellwirkung. Steht eines der über den Antriebsstrang oder die Radbremsen festgebremsten Räder auf einer nur wenig griffigen Fahrbahn, z.B. Splitt oder Eis, so kann das andere Rad sich in Bewegung setzen, da das Hinterachsdifferential nicht blockiert ist.

Der Erfindung liegt daher das Problem zugrunde, ein Bremskraftverteilergetriebe zu schaffen, das auf einer ungleich griffigen Fahrbahn eine ausreichende Feststellwirkung auch bei einem Ausfall eines Teils der Bremsanlage gewährleistet. Das Verteilergetriebe soll bei einem geringen Bauraumbedarf, einem niedrigen Wartungsaufwand und einfacher Nachstellbarkeit als Modul aufgebaut sein.

Das Problem wird mit den Merkmalen des Hauptanspruchs gelost. Das Verteilergetriebe ist ein Hebelgetriebe, das in oder an einem Gehäuse oder Gestelle angeordnet ist und sowohl einen Betätigungshebel als auch einen Waagebalken umfaßt. Der Betätigungshebel ist mit einer im Bereich des einen Hebelendes liegenden Anlenkstelle am Gehäuse oder Gestell angelenkt, während er mit einer im Bereich des anderen Hebelendes liegenden Anlenkstelle an einem muskelkraftbetätigten Betätigungselement direkt oder über einen Seilzug angeschlossen ist. Dabei ist im Bereich zwischen den Anlenkstellen eine Gelenkstelle angeordnet, über die der Waagebalken angelenkt und getragen wird. Der Waagebalken ist über eine im Bereich des einen Hebelendes liegenden Anlenkstelle mit dem die Radbremsseilzüge aufnehmenden Ausgleichselement und einer im Bereich des anderen Hebelendes liegenden Anlenkstelle mit dem Getriebebremsseilzug verbunden. Er hat zwischen den Anlenkstellen eine außermittig sitzende Gelenkstelle, wobei von dieser Gelenkstelle aus der Hebelarm zur Wirkungslinie des Getriebebremsseilzuges größer ist als der Hebelarm zur Wirkungslinie des die Radbremsseilzüge tragenden Ausgleichselements.

Das Bremskraftverteilergetriebe verteilt die Bremsbetätigungskraft über den Waagebalken und die Seilzüge derart, daß die Bremswirkung der Radbremsen ausreichend die Gesetzes- und/oder Werksnorm zur Bremswirkung auf ungleich griffiger Fahrbahn erfüllt. Hierbei wird ein großer Anteil der Bremsbetätigungskraft der hochwirksamen Getriebebremse zugeteilt. Werden für die Getriebebremse und die Feststellbremsen der, Räder Duo-Servobremsen verwendet, werden beispielsweise an jede Radbremse einer Achse 35% und die Getriebebremse 30% weitergeleitet. Die Kombination von Getriebe- und Radbremsen ermöglicht auch bei einem Ausfall einer Radbremse noch eine hohe Bremswirkung auf einer ungleich griffigen Fahrbahn. Steht beispielsweise das Rad mit der ausgefallenen Feststellbremse auf einer glatten Eisflache, so verhindert das auf einem griffigen Fahrbahnabschnitt stehende Rad ein Wegrutschen des Fahrzeugs trotz einem erheblichen Bremskraftverlust. Denn die Getriebebremse blockiert gemeinsam mit der noch arbeitenden Feststellbremse das Achsdifferential, so daß das Feststellen des auf der Eisfläche stehenden Rades über das Differential durch das Blockieren des auf dem griffigen Fahrbahnabschnitt stehenden Rades erfolgt. Das auf der Eisfläche stehende Rad kann sich nicht drehen und damit kann ein Anrollen erst gar nicht beginnen.

Zusätzlich übersetzt der den Waagebalken tragende Betätigungshebel die Muskelkraft des die Feststellbremse betätigenden Kraftfahrers, so daß auf eine Fremdkraft auch bei Kraftfahrzeugen mit 5 bis 8 Tonnen zulässigen Gesamtgewicht verzichtet werden kann. Folglich entfällt hier gegenüber der üblichen druckluftunterstützten Feststellbremse ein Elektrokompressor, ein Luftkessel und die Federspeicher an den Radbremsen.

Das Bremskraftverteilergetriebe wird beispielsweise in einem kompakten Gehäuse untergebracht, aus dem nur die Seilzüge herausführen. Diese Bauweise führt zu einem Raumgewinn im Achsbereich des Kraftfahrzeuges.

Weitere Einzelheiten der Erfindung ergeben sich aus den nicht oder nur teilweise zitierten Unteransprüchen und der nachfolgenden Beschreibung einer schematisch dargestellten Ausführungsform:
- Figur 1:: Bremskraftverteilergetriebe;
- Figur 2:: Nachstelleinrichtung für das Ausgleichselement.

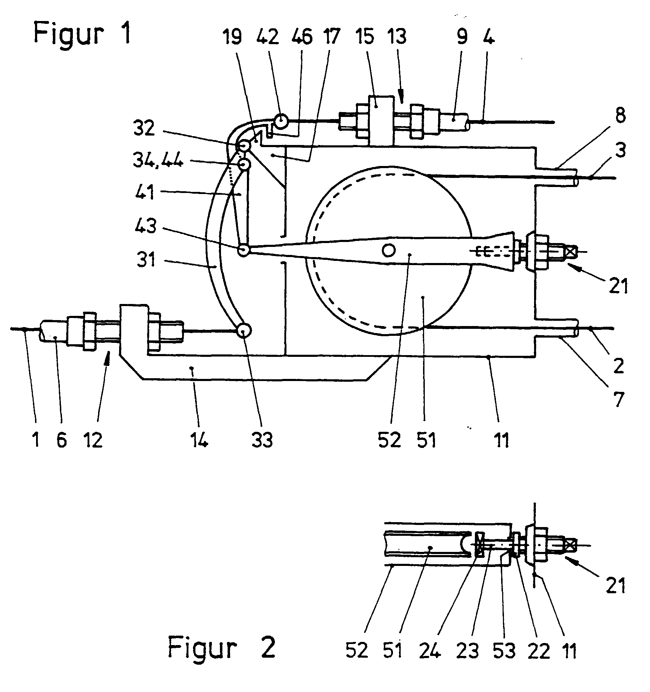

Figur 1 zeigt ein Bremskraftverteilergetriebe das am Kraftfahrzeug zwischen einem muskelkraftbetätigten Betätigungselement und den verschiedenen, feststellbaren Bremsen angeordnet ist. Vom nicht dargestellten Betätigungselement kommt ein Seilzug (1) der die Muskelkraft auf die Seilzüge (2, 3, 4) verteilt. Die Seilzüge (1-4) sind in Schutzrohren (6-9) geführt, die sich an einem am Kraftfahrzeug fest angeordneten Gehäuse (11) abstützen. Die Schutzrohre (6) und (9) enden am Gehäuse (11) in den Nachstelleinrichtungen (12) und (13). Letztere sind beispielsweise kurze, die Schutzrohre (6,9) abstützende Rohrstücke mit einem Außensechskant und einem Außengewinde. Sie sind am Gehäuse oder wie hier an separaten Trägern (14, 15) in Gewindebohrungen eingeschraubt und mit je einer Mutter gekontert.

Am Gehäuse (11) ist in einem Lagerbock (17) ein Betätigungshebel (31) angelenkt. Der Betätigungshebel (31) hat an beiden Enden jeweils eine Anlenkstelle (32) und (33), wobei in letzterer der das Hebelgetriebe betätigende Seilzug (1) eingehängt ist. Die andere Anlenkstelle (32) ist im Lagerbock (17) schwenkbar gelagert. Der Betätigungshebel (31) hat im Bereich zwischen den Anlenkstellen (32) und (33) eine Gelenkstelle (34), über die er mit einem Waagebalken (41) bzw. dessen Gelenkstelle (44)gelenkig verbunden ist. Zur Übersetzung der die Feststellbremsen betätigenden Muskelkraft ist die Hebellänge zwischen der Anlenkstelle (33) und der Gelenkstelle (34)großer als die Hebellänge zwischen der Anlenkstelle (32) und der Gelenkstelle (34).

Der Waagebalken (41) verteilt die in die Gelenkstelle (44) eingeleitete Feststellkraft auf den zur Getriebebremse führenden Seilzug (4) und das die Radbremsseilzüge (7) und (8) tragende und/oder umlenkende Ausgleichselement (51). Dazu ist in der Anlenkstelle (42) der Seilzug (4) eingehängt. An der anderen Anlenkstelle (43) ist das Ausgleichselement (51), das hier beispielsweise eine Ausgleichsrolle (51) ist, über einen Rollenträger (52) schwenkbar gelagert. Die Seilzüge (2) und (3) sind im Ausführungsbeispiel Teile eines Drahtseils, das die Ausgleichsrolle (51) auf ca. 180° umschlingt. Um bei einem Bruch des Drahtseils nicht den Ausfall der gesamten Feststellbremsanlage durch ein Kippen des Waagebalkens (41) zu riskieren, ist am Gehäuse (11) eine Anschlag- und Nachstellschraube (21) eingeschraubt und gekontert, vgl. Figur 2. Die Schraube (21) hat einen dreiteiligen Kopf. Unmittelbar an das Gewinde schließt sich ein Nachstellbund (22) an, an dessen Stirnfläche nachstellbar - bei nicht betätigter Feststellbremse - der Rollenträger (52) anliegt. An den Nachstellbund (22) schließt sich ein Schaft (23) an, der in einen Anschlagbalken (24) übergeht. Letzterer hat zwei plane Seitenflächen, deren Abstand dem Durchmesser des Schaftes (23) entspricht. Der Anschlagbalken (24) wird sei der Montage durch ein im Rollenträger (52) vorhandenes Langloch (53) gesteckt und in einer Einschraubstellung so positioniert, daß er sich mit dem Langloch (53) kreuzt. Die Einschraubtiefe im Gehäuse (11) ist von der Nachstellposition des Nachstellbunds (22) abhängig.

Beim Bruch eines Seilzugs (2) und/oder (3) legt sich bei einer Betätigung der Feststellbremse der Rollenträger (52) an den über den Schaft (23) überstehenden Balkenabschnitt des Anschlagbalkens (24) an und verhindert so ein unkontrolliertes Kippen des Waagebalkens (41), so daß zumindest die Getriebebremse betätigbar bleibt. Die Schraube (21), die zum Nachstellen um jeweils 180°, an ihrem freien Ende einen Vierkant trägt, verändert mit dem Nachstellen auch die Anschlagposition. Hierbei bleibt der Gesamthub des Rollenträgers konstant.

Das die Seilzüge (2,3) bildende Drahtseil ist gegebenenfalls ca. auf der halben Umschlingungsstrecke an der Ausgleichsrolle (51) befestigt. In diesem Fall ist der Schwenkwinkel der Ausgleichsrolle (51) gegenüber dem Rollenträger (52) zusätzlich mechanisch begrenzt, so daß bei dem Reißen eines Seilzugs (2) oder (3) der nicht gerissene, andere Seilzug gehalten wird und das Feststellen einer Radbremse weiterhin möglich ist.

Um bei einem Reißen des Getriebebremsseilzugs (4) die Feststellung der Radbremsen weiterhin zu gewährleisten, hat der Waagebalken (41) beispielsweise im Bereich der Anlenkstelle (42) einen Anschlag (46), mit dem er dann an einem Gehäuseanschlag (19) zur Anlage kommt.

### Bezugszeichenliste

- 1: Seilzug zum Betätigungselement
- 2, 3: Seilzüge zu den Radbremsen
- 4: Seilzug zu der Getriebebremse
- 6,7,8,9: Schutzrohre
- 11: Gehäuse
- 12, 13: Nachstelleinrichtungen
- 14, 15: Träger für (12, 13)
- 17: Lagerbock
- 19: Gehäuseanschlag
- 21: Anschlag- und Nachstellschraube
- 22: Nachstellbund
- 23: Schaft
- 24: Anschlagbalken
- 31: Betätigungshebel
- 32: Anlenkstelle am Gehäuse
- 33: Anlenkstelle für den Seilzug (1)
- 34: Gelenkstelle
- 41: Waagebalken
- 42: Anlenkstelle für den Seilzug (4)
- 43: Gelenkstelle für (51, 52)
- 44: Gelenkstelle
- 46: Anschlag
- 51: Ausgleichselement, Ausgleichsrolle
- 52: Rollenträger
- 53: Langloch

## Patentansprüche

1. Bremskraftverteilergetriebe für ein muskelkraftbetätigtes Feststellbremssystem eines Kraftfahrzeugs bei dem die Bremskraft mindestens über Seilzüge sowohl auf ein Rad des Fahrzeuggetriebes als auch auf die Räder mindestens einer angetriebenen Fahrzeugachse übertragen wird, wobei die Radbremsen pro Fahrzeugachse über jeweils ein Ausgleichselement angelenkt werden, dadurch gekennzeichnet,
- daß das Verteilergetriebe ein Hebelgetriebe ist, das in oder an einem Gehäuse oder Gestell angeordnet ist und sowohl einen Betätigungshebel (31) als auch einen Waagebalken (41) umfaßt,
- daß der Betätigungshebel (31) mit einer im Bereich des einen Hebelendes liegenden Anlenkstelle (32) am Gehäuse (11) oder Gestell angelenkt ist, während er mit einer im Bereich des anderen Hebelendes liegenden Anlenkstelle (33) an einem muskelkraftbetätigten Betätigungselement direkt oder über einen Seilzug (1) angeschlossen ist, wobei im Bereich zwischen den Anlenkstellen (32, 33) eine Gelenkstelle (34) angeordnet ist, über die der Waagebalken (41) angelenkt und getragen wird,
- daß der Waagebalken (41) über eine im Bereich des einen Hebelendes liegenden Anlenkstelle (43) mit dem die Radbremsseilzüge (2, 3) aufnehmenden Ausgleichselement (51) und einer im Bereich des anderen Hebelendes liegenden Anlenkstelle (42) mit dem Getriebebremsseilzug (4) verbunden ist und zwischen den Anlenkstellen (42, 43) eine außermittig sitzende Gelenkstelle (44) hat, wobei die Hebellänge (a) zwischen der den Getriebebremsseilzug (4) lagernde Anlenkstelle (42) und der Gelenkstelle (44) größer ist als die Hebellänge (b) zwischen der anderen Anlenkstelle (43) und der Gelenkstelle (44).

2. Bremskraftverteilergetriebe gemäß Anspruch 1, dadurch gekennzeichnet, daß die Hebellänge (a) zwischen der Anlenkstelle (42) für den Getriebebremsseilzug (4) und der Gelenkstelle (44) 70±10% der Summe aus den Hebellängen (a) und (b) beträgt.

3. Bremskraftverteilergetriebe gemäß Anspruch 1, dadurch gekennzeichnet, daß bei dem Betätigungshebel (31) die Hebellänge zwischen der Anlenkstelle (32) am Gehäuse (11) und der Wirkungslinie des Seilzugs (1) mehr als doppelt so groß ist wie die Hebellänge zwischen der Anlenkstelle (32) und der den Waagebalken (41) lagernden Gelenkstelle (34).

4. Bremskraftverteilergetriebe gemäß Anspruch 1, dadurch gekennzeichnet, daß am Gehäuse (11) oder Gestell ein Anschlag (19) angeordnet ist, an dem sich der Waagebalken (41) bei einem Bruch oder einer Überdehnung des Getriebebremsseilzugs (4) anlegt.

5. Bremskraftverteilergetriebe gemäß Anspruch 1, dadurch gekennzeichnet, daß am Gehäuse (11) oder Gestell ein Anschlag (21-24) angeordnet ist, an dem sich der Waagebalken (41) oder das Ausgleichselement (51) bei einem Bruch oder einer Überdehnung mindestens eines Radbremsseilzugs (2) oder (3) anlegt.

6. Bremskraftverteilergetriebe gemäß Anspruch 5, dadurch gekennzeichnet, daß der Anschlag (21-24) den Hub des Ausgleichselements (51) sowohl in Betätigungsrichtung als auch entgegen dieser Richtung begrenzt.
